# DEMANDE DE BREVET EUROPEEN

(11) **EP 0 977 407 A1**
(43) Date de publication de la demande: **02.02.2000**
(21) Numéro de dépôt: 99410093.1
(22) Date de dépôt: 30.07.1999
(51) Int. Cl.: H04L 25/02, H04L 25/08

(54) **Amplificateur dont la sortance varie en fonction du temps**

(30) Priorité: 31.07.1998 FR 9810082
(71) Demandeur: STMicroelectronics S.A., 94250 Gentilly (FR)
(72) Inventeur: Ferrant, Richard, 38330 Saint Ismier (FR)
(74) Mandataire: de Beaumont, Michel

(57) **Abrégé**

L'invention concerne un amplificateur ayant une sortance (1/Z) qui varie en fonction du temps écoulé entre un front d'un signal de synchronisation (CK) et un front d'un signal d'entrée logique (D).

## Description

La présente invention concerne les amplificateurs utilisés pour fournir des données numériques à des lignes électriques et plus particulièrement des amplificateurs fournissant des données en parallèle sur plusieurs lignes.

Il est fréquent dans un circuit numérique d'utiliser des données transmises en parallèle au moyen de plusieurs lignes. Chaque ligne reçoit les signaux fournis par un amplificateur tampon, et se comporte comme une charge capacitive de cet amplificateur. Un signal logique fourni par un amplificateur tampon à une charge capacitive présente des transitions de pente d'autant plus forte que la capacité de charge est faible. Un signal logique est pris en compte lorsqu'il atteint un seuil de tension de basculement, ce seuil étant atteint d'autant plus rapidement que le signal présente des transitions de forte pente.

Si on considère plusieurs amplificateurs tampon fournissant en même temps des signaux logiques respectifs à des portes logiques identiques par l'intermédiaire de lignes présentant des capacités différentes, les portes logiques prennent en compte les transitions des signaux à des instants différents.

Dans certaines applications, il peut être nécessaire de garantir que les signaux fournis en même temps soient pris en compte pratiquement en même temps par les portes logiques.

La capacité d'une ligne dépend principalement de ses dimensions. Lorsque l'on conçoit sur un circuit un bus parallèle comprenant de nombreuses lignes, les longueurs de chaque ligne du bus sont généralement, pour des questions de routage, très différentes bien que partant d'un même point du circuit et aboutissant à un même point du circuit. Il est difficile de concevoir un bus parallèle et de donner les mêmes dimensions à toutes les lignes du bus. Plutôt que d'ajuster la valeur de la charge de chaque amplificateur tampon, on peut également ajuster la taille de chacun des amplificateurs en fonction de leur charge. De telles ajustements sont complexes, longs et ainsi coûteux à mettre en oeuvre.

On peut également resynchroniser les données reçues, par exemple en installant une bascule D à l'extrémité de chacune des lignes et en synchronisant toutes les bascules sur un même signal de synchronisation. Cependant, une telle solution implique que la fréquence du signal de synchronisation utilisé soit égale à la fréquence des signaux de données, ou égale à un multiple de cette fréquence. Si, comme cela est fréquent, on ne dispose pas sur le circuit d'une fréquence supérieure à la fréquence des signaux de données, il s'écoule entre l'émission des données sur les lignes électriques et leur resynchronisation, en sortie des bascules D, une période de la fréquence des données.

Dans certains circuits, notamment les circuits de mémoire, un tel retard de synchronisation peut être trop élevé pour atteindre une vitesse de fonctionnement souhaitée.

Un objet de la présente invention est de prévoir un dispositif permettant de resynchroniser rapidement des données transmises en parallèle.

Pour atteindre cet objet, la présente invention prévoit un amplificateur ayant une sortance qui varie en fonction du temps écoulé entre un front d'un signal de synchronisation et un front d'un signal d'entrée logique.

Selon un mode de réalisation de la présente invention, l'amplificateur comprend plusieurs blocs identiques comprenant chacun un étage de sortie connecté entre une entrée de données et une sortie de données, l'entrée et la sortie de données étant connectées respectivement aux entrées et aux sorties de données des autres blocs, un élément de retard, les éléments de retard de tous les blocs étant connectés en série, l'élément de retard du premier bloc recevant le signal de synchronisation, un détecteur de fronts dont l'entrée est connectée à l'entrée de l'étage de sortie, et des moyens pour inhiber la propagation du signal de synchronisation à travers l'élément de retard lorsque le signal produit par le détecteur de fronts du bloc précédent est actif et pour activer l'étage de sortie et le détecteur de fronts lorsque le signal produit par l'élément de retard du bloc précédent est actif.

Selon un mode de réalisation de la présente invention, l'amplificateur comprend plusieurs blocs identiques comprenant chacun un étage de sortie connecté entre une entrée de données et une sortie de données, l'entrée et la sortie de données étant connectées respectivement aux entrées et aux sorties de données des autres blocs, un élément de retard, les éléments de retard de tous les blocs étant connectés en série, l'élément de retard du premier bloc recevant le signal de synchronisation, un détecteur de fronts dont l'entrée est connectée à l'entrée de l'étage de sortie, et des moyens pour inhiber la propagation du signal de synchronisation à travers l'élément de retard lorsque le signal produit par le détecteur de fronts du bloc précédent est actif et pour inhiber l'étage de sortie et le détecteur de fronts lorsque le signal produit par l'élément de retard du bloc précédent est actif.

Selon un mode de réalisation de la présente invention, chacun des blocs comprend un premier transistor MOS d'un premier type de conductivité connecté entre une première borne d'alimentation et une borne de sortie de données, et connectés en série entre une borne de synchronisation et la borne de synchronisation du bloc suivant, un premier inverseur alimenté entre la première borne d'alimentation et une deuxième borne d'alimentation par l'intermédiaire d'un second transistor MOS du deuxième type de conductivité, un deuxième inverseur, et un élément de retard, la grille du premier transistor étant reliée à la grille du second transistor du bloc suivant, et étant activée lorsque à la fois un signal d'entrée de données et le signal fourni à la borne de synchronisation du bloc suivant sont activés.

Selon un mode de réalisation de la présente invention, le deuxième inverseur est connecté en sortie du premier inverseur, et l'élément de retard comprend une source de courant réglable entre le second transistor et la deuxième borne d'alimentation, et un troisième inverseur et une capacité, reliés en série entre la sortie du deuxième inverseur et la connexion entre le second transistor et le premier inverseur.

Selon un mode de réalisation de la présente invention, la source de courant est réglée pour fournir un courant décroissant lorsque la conductivité intrinsèque des transistors croît.

Ces objets, caractéristiques et avantages, ainsi que d'autres de la présente invention seront exposés en détail dans la description suivante de modes de réalisation particuliers faite à titre non-limitatif en relation avec les figures jointes parmi lesquelles :
la figure 1 représente un bus de données parallèle resynchronisé au moyen d'amplificateurs selon la présente invention ;
la figure 2 représente un chronogramme illustrant le fonctionnement du bus de la figure 1 ;
la figure 3 représente un schéma bloc d'un mode de réalisation d'un amplificateur selon la présente invention ;
la figure 4 représente un chronogramme illustrant le fonctionnement d'un amplificateur selon la présente invention ;
la figure 5 représente un chronogramme illustrant la variation en fonction du temps de la sortance d'un amplificateur selon la présente invention ;
la figure 6 représente un schéma simplifié d'un bloc élémentaire de l'amplificateur de la figure 2 ; et
la figure 7 représente un mode de réalisation d'une variante d'une partie du bloc élémentaire de la figure 6.

La présente invention consiste à resynchroniser des signaux de données numériques transmis en parallèle en ajoutant un faible retard à un signal ayant un fort retard et en ajoutant un fort retard à un signal ayant un faible retard, de telle manière que tous les signaux présentent finalement un retard constant.

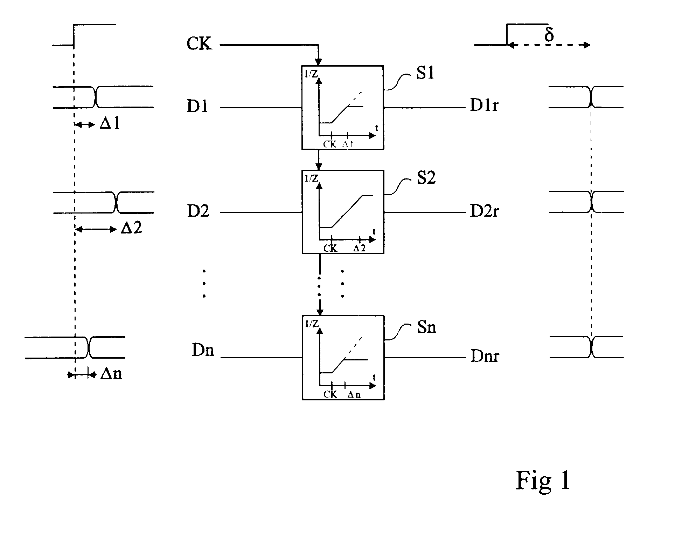

La figure 1 représente un bus comprenant n lignes sur lesquelles sont transmis n signaux de données numériques D (D1, D2, ... Dn) présentant des retards respectifs Δ (Δ1, Δ2, ... Δn) par rapport à un front d'un signal d'horloge CK. Les signaux D traversent des amplificateurs S (S1, S2,... Sn). Les amplificateurs S produisent des signaux retardés Dr (D1r, D2r,...Dnr).

Selon l'invention, la sortance de chaque amplificateur S augmente régulièrement à partir du front du signal d'horloge CK et se stabilise à la valeur atteinte lors de l'arrivée d'un front du signal de données correspondant. Les amplificateurs sont de préférence situés en fin de ligne, de manière que les sorties des amplificateurs S soient reliées à des charges de même valeur. Ainsi, le temps de commutation de chaque amplificateur, c'est à dire le temps qu'il faut à l'amplificateur pour amener sa sortie à un niveau de tension correspondant à un basculement de niveau logique, est inversement proportionnel à la sortance de l'amplificateur et sera le même pour deux amplificateurs présentant la même sortance et ayant la même charge de sortie.

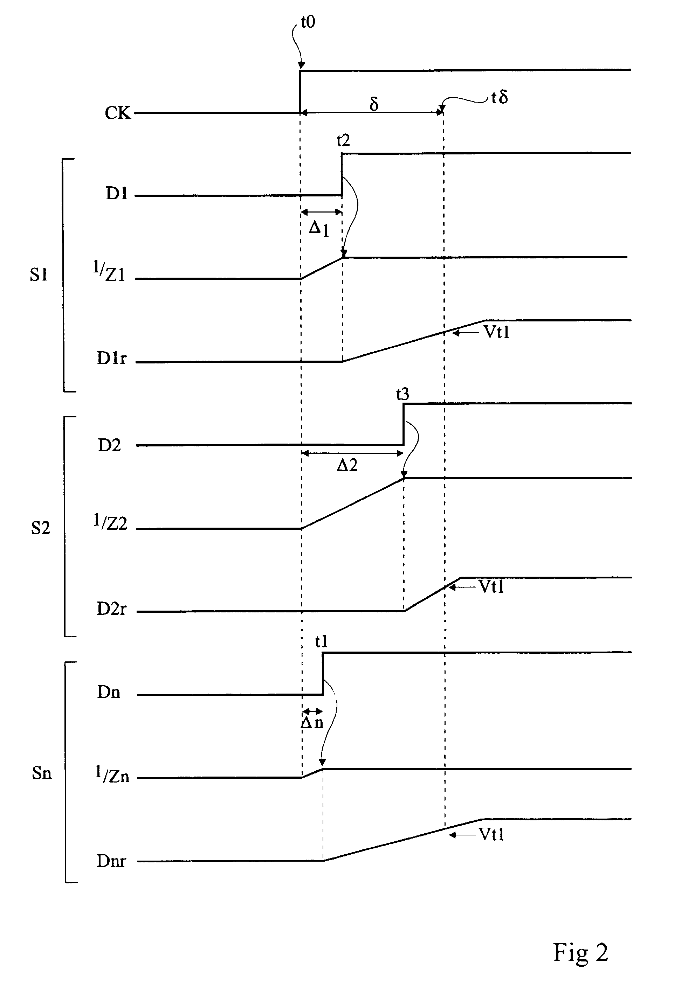

La figure 2 est un chronogramme illustrant plus en détail le fonctionnement des amplificateurs S (S₁, S₂, Sₙ) de la figure 1 à l'aide d'un exemple. A un instant t₀, le signal de synchronisation CK devient actif. La sortance 1/Z de chacun des amplificateurs commence à croître selon une même pente prédéterminée.

A un instant t₁, arrive le front le plus en avance des signaux D, dans cet exemple un front du signal Dn. La sortance 1/Zn de l'amplificateur Sn cesse de croître et le signal de sortie Dnr attaque sa charge avec la sortance atteinte. La sortance 1/Zn n'ayant pas eu le temps d'atteindre une valeur élevée, la pente du signal Dnr est faible et le temps de commutation de l'amplificateur Sn est long.

A un instant t₂, arrive un front du signal D1, en retard par rapport au front du signal Dn. La sortance 1/Z1 de l'amplificateur S1 cesse de croître et le signal de sortie D1r attaque sa charge avec la sortance atteinte. La sortance 1/Z1 ayant atteint une valeur plus élevée que la valeur 1/Zn précédente, la pente du signal Dlr est plus forte que celle du signal Dnr. Ainsi, le temps de commutation de l'amplificateur S1 est plus court que celui de l'amplificateur Sn.

A un instant t₃, arrive le front le plus en retard des signaux D, dans cet exemple un front du signal D2. La sortance 1/Z2 de l'amplificateur S2 ayant atteint une valeur plus élevée que les valeurs 1/Z précédentes, la pente du signal D2r est plus forte que celle des autres signaux Dr. Le temps de commutation de l'amplificateur S2 est le plus court.

On choisit la pente de croissance de la sortance des amplificateurs pour que tous les signaux Dr atteignent un seuil de commutation logique Vₜ₁ en un même instant t_{δ}, c'est-à-dire pour que tous les signaux Dr présentent un même retard δ = t_{δ}-t₀ par rapport au front du signal de synchronisation.

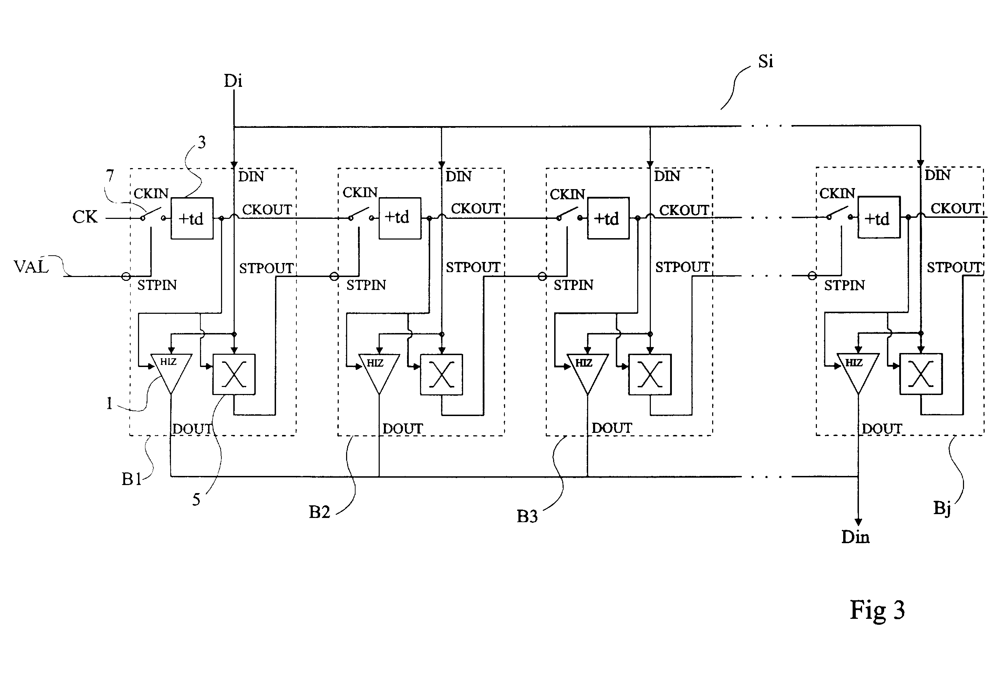

La figure 3 représente schématiquement un mode de réalisation d'un amplificateur Si assurant les fonctions de ceux de la figure 1. Il se compose de j blocs élémentaires B (B1 à Bj) identiques.

Un bloc B comprend un étage de sortie 1 connecté entre une entrée de données DIN et une sortie de données DOUT. Un élément de retard 3 est connecté entre une entrée de synchronisation CKIN et une sortie de synchronisation CKOUT. Son temps de traversée est égal à un temps td prédéterminé. Un détecteur de fronts 5 est connecté entre l'entrée de l'étage de sortie 1 et une sortie d'inhibition STPOUT.

Un commutateur 7 est intercalé entre l'entrée de synchronisation CKIN et l'entrée de l'élément de retard 3. Le commutateur 7 est connecté pour être ouvert lorsque le signal présent sur une entrée d'inactivation STPIN est actif. La sortie de l'élément de retard 3 est connectée à une borne de mise à haute impédance de l'étage de sortie 1 et à une borne d'activation du détecteur de fronts 5.

Les entrées de données DIN des blocs B sont toutes connectées à l'entrée Di de l'amplificateur Si, et les sorties DOUT sont toutes connectées à la borne de sortie Dir de l'amplificateur Si.

L'entrée CKIN du bloc B1 reçoit le signal de synchronisation CK. La sortie CKOUT de chaque bloc est reliée à l'entrée CKIN du bloc suivant. L'entrée d'inactivation STPIN du bloc B1 reçoit un signal VAL tel que le bloc soit toujours activé. La sortie d'inactivation STPOUT de chaque bloc est reliée à l'entrée d'inactivation STPIN du bloc suivant.

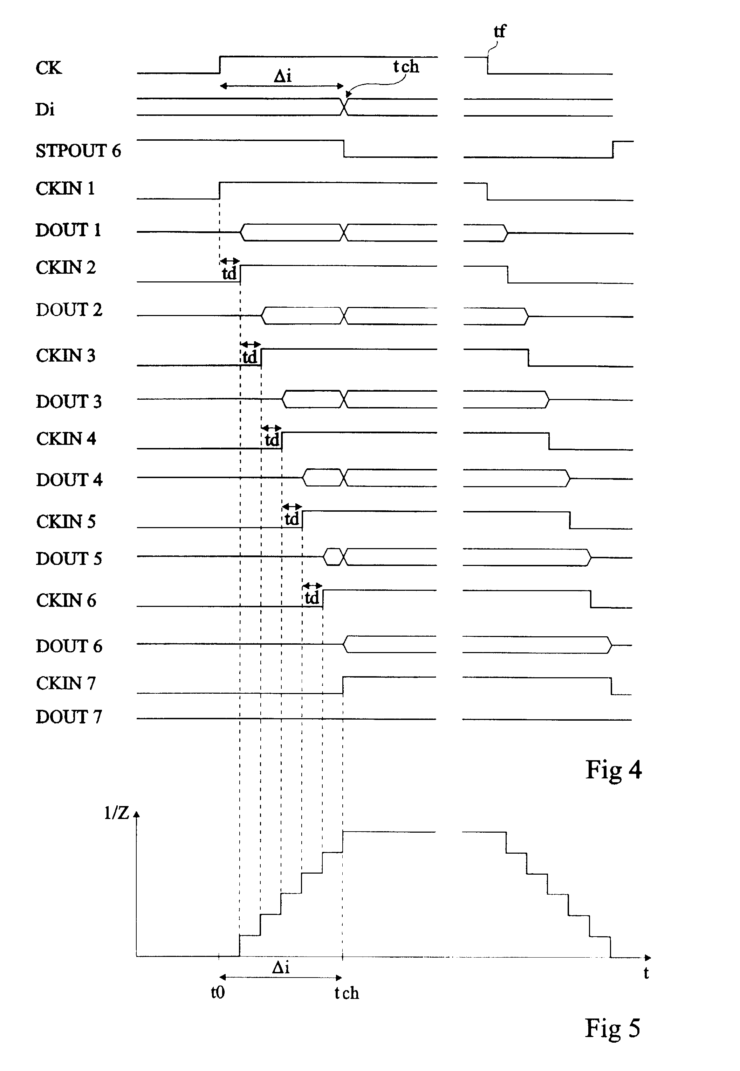

La figure 4 représente les états des sorties DOUT1 à DOUT7 des étages de sortie de sept blocs consécutifs ainsi que les signaux de synchronisation CKIN1 à CKIN7 qui doivent activer successivement les étages de sortie des blocs B1 à B7. On a également représenté le signal de données Di, qui change en un instant t_{ch} et un signal d'invalidation STPOUT6, actif à zéro, qui représente le signal d'invalidation envoyé sur l'entrée d'invalidation du bloc B7.

Le front actif du signal de synchronisation CK se propage ainsi d'un bloc B à l'autre, traversant chaque élément de retard 3 en un temps td. Dans chaque bloc, lorsque le signal de synchronisation parvient en sortie de l'élément de retard 3, il active l'étage de sortie 1 et le détecteur de fronts 5. Lorsqu'un étage de sortie 1 est activé, sa borne de sortie DOUT passe d'un état de haute impédance à un état logique correspondant au signal Di. On remarquera que lorsqu'une borne de sortie est en haute impédance, elle n'influe pas sur la tension de la ligne à laquelle elle est connectée. Lorsque toutes les bornes DOUT sont en haute impédance, la ligne de sortie Dr de l'amplificateur reste par effet capacitif à une tension proche de la dernière tension à laquelle elle a été amenée.

Les étages de sortie des blocs B1 à B6 sont activés successivement par la propagation du signal de synchronisation CK, et leurs sorties DOUT1 à DOUT6 quittent successivement l'état de haute impédance à des instants séparés par des intervalles td.

Lorsqu'une transition du signal de données Di apparaît à l'instant t_{ch} sur l'entrée DIN des blocs B, tous les blocs B qui ont été activés, c'est-à-dire ici les blocs B1 à B6, fournissent sur leur sortie DOUT la transition du signal Di. Les étages de sortie 1 des blocs B suivants restent inactifs et à haute impédance. En effet, le détecteur de fronts 5 du dernier bloc activé au moment de la transition de signal Di (ici le bloc B6) détecte cette transition et active sa sortie d'inactivation STPOUT (STPOUT6), ce qui ouvre le commutateur 7 du bloc suivant, et empêche la propagation du signal de synchronisation à travers ce bloc. Les blocs suivants ne peuvent ainsi plus être activés.

En fait, les détecteurs de fronts 5 de tous les blocs B activés valident leur signal STPOUT à l'instant T_{ch}. Mais lorsqu'un bloc déjà activé reçoit un signal d'inactivation STPIN, ce dernier reste activé tant que le signal de synchronisation CKIN reçu par le bloc est actif.

Si l'instant t_{ch} de la transition du signal Di correspond à un retard Δi par rapport au front actif du signal de synchronisation CK, le nombre d'intervalles de temps td compris dans le retard Δi détermine le nombre de blocs B dont l'étage de sortie 1 sera activé.

A un instant t_{f}, le signal de synchronisation CK présente un front inactif. Cette inactivation du signal CK se propage dans les blocs B successifs, retardée à chaque fois par le temps td, et inactive successivement les étages de sortie et les détecteurs de fronts 5. Les signaux STPOUT produits par les détecteurs de fronts sont inactivés et referment les commutateurs 7. Le circuit est alors à son état d'origine, prêt à traiter une nouvelle transition du signal Di.

La figure 5 représente l'évolution de la sortance de l'amplificateur, résultant du chronogramme de la figure 4. Chaque étage de sortie activé accroît la sortance de l'amplificateur d'une valeur égale à celle d'un étage de sortie, et la sortance de l'amplificateur croît par paliers égaux. Lorsqu'une transition du signal de données est détectée, la propagation du signal de synchronisation est arrêtée, la sortance de l'amplificateur cesse de croître et reste constante jusqu'à ce que le signal de synchronisation soit inactivé.

Par conséquent le temps de commutation souhaité de l'amplificateur est approché par échelons. Les échelons sont définis par le temps de retard td et la sortance d'un bloc élémentaire B de l'amplificateur. Pour obtenir la meilleure résolution des échelons, c'est-à-dire la meilleure approximation du temps de commutation souhaité, la sortance d'un bloc élémentaire B est choisie minimale. Cela est obtenu en choisissant les transistors de son étage de sortie 1 de dimensions minimales. L'amplitude de variation de la sortance est obtenue par le choix du retard td et du nombre de blocs élémentaires.

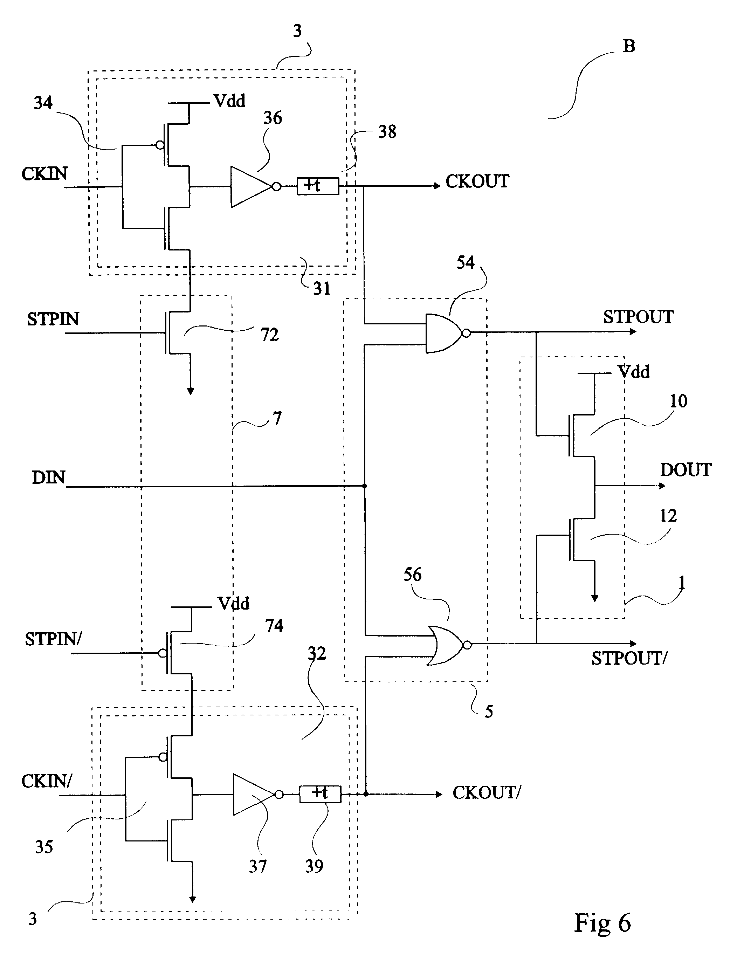

La figure 6 représente un schéma simplifié d'un bloc élémentaire B de la figure 3.

L'étage de sortie 1 est un inverseur comprenant un transistor MOS 10 à canal P et un transistor MOS 12 à canal N.

L'élément de retard 3 est composé de deux blocs 31 et 32 comprenant chacun un inverseur 34 ou 35, un inverseur 36 ou 37 et un dispositif de retard 38 ou 39 connectés en série. Le bloc 31 est connecté entre les bornes CKIN et CKOUT, et le bloc 32 entre des bornes CKIN/ et CKOUT/. Les signaux présents sur les bornes CKIN et CKIN/ ou CKOUT et CKOUT/ sont complémentaires.

Le détecteur de fronts 5 comprend une porte NAND 54 dont une entrée est connectée à la borne DIN, l'autre entrée à la sortie du bloc 31, et la sortie à la grille du transistor 10. La sortie de la porte 54 est également reliée à la borne STPOUT. Il comprend également une porte NOR 56 dont une entrée est connectée à la borne DIN, l'autre entrée à la sortie du bloc 32, et la sortie à la grille du transistor 12. La sortie de la porte 54 est également reliée à une borne STPOUT/.

Le commutateur 7 comprend un transistor MOS 72 à canal N connecté entre la masse et une borne d'alimentation de l'inverseur 34, dont la grille est reliée à la borne STPIN. Il comprend également un transistor MOS 74 à canal P connecté entre une borne de tension d'alimentation Vdd et une borne d'alimentation de l'inverseur 35. La grille du transistor 74 est reliée à une borne STPIN/. La borne STPIN/ est connectée à la borne STPOUT/ du bloc précédent.

Un signal de synchronisation fourni sur la borne d'entrée CKIN (ou CKIN/) se propage à travers le bloc 31 (ou 32) en un temps prédéterminé td. La sortie de synchronisation CKOUT (ou CKOUT/) est alors activée. Si le signal présent sur la borne d'entrée DIN est à 1, la sortie de la porte NAND 54 est amenée à zéro, ce qui active la borne d'inactivation STPOUT. La grille du transistor 10 est également activée, ce qui amène la sortie de données DOUT à 1. Si le signal présent sur la borne DIN est à 0, la sortie de la porte NOR 56 est amenée à 1, ce qui active la borne d'inactivation STPOUT/. La grille du transistor 12 est également activée, ce qui amène la sortie de données DOUT à zéro.

Un signal d'inactivation fourni sur la borne STPIN (ou STPIN/) ouvre le transistor 72 (ou 74), ce qui empêche un état actif du signal CKIN (ou CKIN/) de se propager à travers l'inverseur 34 (ou 35) vers la borne CKOUT (ou CKOUT/). Si le signal CKIN (ou CKIN/) est actif lorsque le transistor 72 (ou 74) est ouvert, le signal CKOUT (ou CKOUT/) reste actif par inertie capacitive jusqu'à l'inactivation du signal CKIN (ou CKIN/).

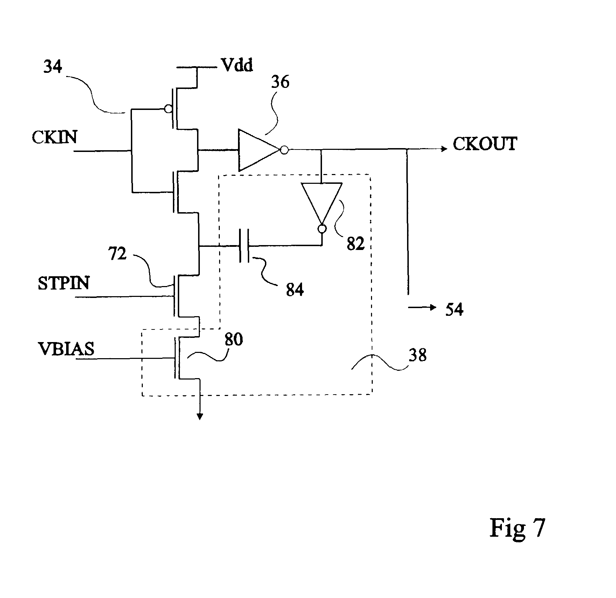

La figure 7 représente un mode de réalisation du bloc 31 de la figure 6. Les éléments 34, 36 et 72 de la figure 7 sont ceux de la figure 6. Le dispositif 38 comprend une source de courant 80 intercalée entre le transistor 72 et la masse. Il comprend en outre un inverseur 82 connecté en sortie de l'inverseur 36, une capacité 84 connectée entre la sortie de l'inverseur 82 et le noeud de connexion entre l'inverseur 34 et le transistor 72. La source de courant 80 est commandée par une tension VBIAS.

Avec cette configuration, le retard td introduit par le circuit dépend principalement de la taille de la capacité 84 et du courant fourni par la source de courant 80. On remarque qu'il est possible de faire varier ce retard en faisant varier le courant fourni par la source de courant 80.

Il est connu que la vitesse de fonctionnement de l'amplificateur peut dériver, par exemple avec une variation de la conductivité des transistors qui le composent, due à une variation de température ou de la tension d'alimentation du circuit. Il est possible de compenser une dérive de la vitesse de fonctionnement de l'amplificateur en assujettissant la tension de commande VBIAS de la source de courant à la conductivité des transistors de l'amplificateur. Les moyens pour obtenir une telle tension VBIAS sont classiques et ne seront pas détaillés.

Bien entendu, la présente invention est susceptible de diverses variantes et modifications qui apparaîtront à l'homme de l'art. En particulier, on peut prévoir un amplificateur dont la fonction est d'augmenter le retard d'un signal de données par rapport à un signal de référence plutôt que de le compenser. Un tel amplificateur, placé sur chaque ligne d'un bus parallèle, permet de disperser les fronts de signaux se propageant en parallèle et ainsi de limiter le bruit produit par ces fronts. En effet, lorsque plusieurs signaux transmis en parallèle commutent simultanément, cela produit un fort appel de courant sur l'alimentation du circuit et crée du bruit sur les lignes d'alimentation. De même, la propagation simultanée de signaux sur un bus parallèle peut entraîner l'apparition de bruit électromagnétique. Ainsi, il existe des cas dans lesquels il est souhaitable de désynchroniser des données transmises en parallèle, pour diminuer l'appel de courant dû à leur commutation simultanée ou pour diminuer le bruit électromagnétique produit par leur commutation simultanée.

Une première solution, si le synchronisme des données n'est pas parfait, consiste à amplifier les différents décalages existants entre chaque donnée et un signal de référence. Pour cela, on utilise un amplificateur semblable à l'amplificateur de la figure 3, dans lequel tous les étages de sortie sont initialement activés, et dans lequel le signal produit en sortie de l'élément de retard d'un bloc désactive l'étage de sortie de ce bloc. Ainsi, la sortance de l'amplificateur diminue avec le temps, et l'écart existant entre les signaux reçus par les amplificateurs est accru.

Une deuxième solution, si les données sont parfaitement synchrones par rapport au signal de synchronisation, peut consister à faire varier aléatoirement le nombre de blocs activés dans chaque amplificateur en fonction du temps afin que la sortance de chaque amplificateur change aléatoirement, et soit différente d'un amplificateur à l'autre. Cela permet de désynchroniser les signaux de données en retardant chacun d'eux selon un retard aléatoire différent.

## Revendications

1. Amplificateur ayant une sortance (1/Z) qui varie en fonction du temps écoulé entre un front d'un signal de synchronisation (CK) et un front d'un signal d'entrée logique (D).

2. Amplificateur selon la revendication 1, caractérisé en ce qu'il comprend plusieurs blocs identiques (B) comprenant chacun :
un étage de sortie (1) connecté entre une entrée de données (DIN) et une sortie de données (DOUT), l'entrée et la sortie de données étant connectées respectivement aux entrées et aux sorties de données des autres blocs,
un élément de retard (3), les éléments de retard de tous les blocs étant connectés en série, l'élément de retard du premier bloc recevant le signal de synchronisation,
un détecteur de fronts (5) dont l'entrée est connectée à l'entrée de l'étage de sortie, et
des moyens pour inhiber la propagation du signal de synchronisation à travers l'élément de retard lorsque le signal (STPOUT) produit par le détecteur de fronts du bloc précédent est actif et pour activer l'étage de sortie et le détecteur de fronts lorsque le signal (CKOUT) produit par l'élément de retard du bloc précédent est actif.

3. Amplificateur selon la revendication 1, caractérisé en ce qu'il comprend plusieurs blocs identiques comprenant chacun :
un étage de sortie connecté entre une entrée de données et une sortie de données, l'entrée et la sortie de données étant connectées respectivement aux entrées et aux sorties de données des autres blocs,
un élément de retard, les éléments de retard de tous les blocs étant connectés en série, l'élément de retard du premier bloc recevant le signal de synchronisation,
un détecteur de fronts dont l'entrée est connectée à l'entrée de l'étage de sortie, et
des moyens pour inhiber la propagation du signal de synchronisation à travers l'élément de retard lorsque le signal produit par le détecteur de fronts du bloc précédent est actif et pour inhiber l'étage de sortie et le détecteur de fronts lorsque le signal produit par l'élément de retard du bloc précédent est actif.

4. Amplificateur selon la revendication 2, caractérisé en ce que chacun de ses blocs comprend :
un premier transistor MOS (10, 12) d'un premier type de conductivité connecté entre une première borne d'alimentation et une borne de sortie de donnée (DOUT), et
connectés en série entre une borne de synchronisation (CKIN, CKIN/) et la borne de synchronisation du bloc suivant, un premier inverseur (34, 35) alimenté entre la première borne d'alimentation et une deuxième borne d'alimentation par l'intermédiaire d'un second transistor MOS (72, 74) du deuxième type de conductivité, un deuxième inverseur (36, 37), et un élément de retard (38, 39),
la grille du premier transistor étant reliée à la grille du second transistor du bloc suivant, et étant activée lorsque à la fois un signal d'entrée de données (DIN) et le signal (CKOUT, CKOUT/) fourni à la borne de synchronisation du bloc suivant sont activés.

5. Amplificateur selon la revendication 4, dans lequel le deuxième inverseur (36, 37) est connecté en sortie du premier inverseur (34, 35), caractérisé en ce que l'élément de retard (38, 39) comprend :
une source de courant (80) réglable entre le second transistor et la deuxième borne d'alimentation, et
un troisième inverseur (82) et une capacité (84), reliés en série entre la sortie du deuxième inverseur et la connexion entre le second transistor (72, 74) et le premier inverseur.

6. Amplificateur selon la revendication 5, dans lequel la source de courant est réglée pour fournir un courant décroissant lorsque la conductivité intrinsèque des transistors croît.
